# EUROPÄISCHE PATENTSCHRIFT

(11) **EP 2 792 061 B1**
(45) Veröffentlichungstag und Bekanntmachung des Hinweises auf die Patenterteilung: **06.04.2016**
(21) Anmeldenummer: 13700553.4
(22) Anmeldetag: 11.01.2013
(51) Int. Cl.: H02M 7/42, H02P 7/285

(54) **WAHLWEISE STEUERUNG EINES WECHSELSTROMMOTORS ODER GLEICHSTROMMOTORS**
SELECTIVE CONTROL OF AN ALTERNATING CURRENT MOTOR OR DIRECT CURRENT MOTOR
COMMANDE SÉLECTIVE D'UN MOTEUR À COURANT ALTERNATIF OU D'UN MOTEUR À COURANT CONTINU

(30) Priorität: 30.01.2012 DE 102012201269
(43) Veröffentlichungstag der Anmeldung: 22.10.2014
(73) Patentinhaber: Siemens Aktiengesellschaft, 80333 München (DE)
(72) Erfinder: EDER, Manfred, 91352 Schlammersdorf (DE); TÖLLE, Hans-Jürgen, 90419 Nürnberg (DE)
(86) Internationale Anmeldenummer: PCT/EP2013/050501
(87) Internationale Veröffentlichungsnummer: WO 2013/113540

(56) Entgegenhaltungen:
- EP-A2- 1 916 417
- DE-A1- 3 433 886
- US-A1- 2003 218 449
- US-A1- 2006 043 922

## Beschreibung

Wahlweise Steuerung eines Wechselstrommotors oder Gleichstrommotors

Die Erfindung betrifft eine Schaltungsanordnung und ein Verfahren zur wahlweisen Steuerung eines Wechselstrommotors oder eines Gleichstrommotors sowie eine Verwendung des Verfahrens in einem Unterseeboot.

In Unterseebooten erfolgt die elektrische Energieversorgung in der Regel über ein Gleichstromnetz. Daher werden Hilfsantriebe (z.B. für Lüfter, Pumpen, etc.) in Unterseebooten meist mit Gleichstrommotoren betrieben, die üblicherweise über Anlasswiderstände angefahren werden.

EP 0 178 446 A1 offenbart eine Steuereinrichtung für eine Schaltungsanordnung, bei der ein Motor über zwei parallel zueinander angeordnete Halbleitersteller aus einer Gleichspannungsquelle gespeist wird. Jeder dieser Halbleitersteller enthält eine Parallelschaltung zweier steuerbarer Halbleiterventile gleicher Durchlassrichtung in Reihe mit einem Saugtransformator mit Mittenanzapfung. Die Mittenanzapfungen der Saugtransformatoren der Halbleitersteller sind mit den Enden eines dritten Saugtransformators mit einer Mittenanzapfung verbunden, die an einen Pol des Motors angeschlossen ist. Die Steuereinrichtung ist derart ausgebildet, dass sie für die Halbleiterventile Taktfrequenzsignale jeweils mit gleichem Aussteuergrad erzeugt, die aber für die beiden parallelen Schaltungsanordnungen um 90° elektrisch gegeneinander versetzt sind, um den Motor in Drehzahlbereichen zu betreiben, bei denen ein Minimum der Stromwelligkeit erreichbar ist.

US 2006/0043922 A1 offenbart eine Motorsteuerung zum Antrieb mehrphasiger dynamoelektrischer Wechselstrommaschinen mittels einer Gleichspannungsquelle. Die Motorsteuerung umfasst zwei Wechselrichtermodule zur Erzeugung eines mehrphasigen Wechselstroms, die an ein Ausgangsfiltermodul gekoppelt sind. Jedes Wechselrichtermodul weist für jede Phase des Wechselstroms eine Halbbrücke auf, die aus zwei Bipolartransistoren mit isolierter Gate-Elektrode gebildet ist. Die beiden zu derselben Phase gehörenden Halbbrücken der Ausgangsfiltermodule sind jeweils über eine Saugdrossel des Ausgangsfiltermoduls zusammengeschaltet. Zur Erzeugung des Wechselstroms werden die Halbbrücken der Wechselrichtermodule mittels einer Raumzeigermodulation angesteuert.

Der Erfindung liegt die Aufgabe zugrunde, eine verbesserte Schaltungsanordnung anzugeben, mittels derer wahlweise ein Wechselstrommotor oder ein Gleichstrommotor steuerbar ist. Ferner liegt der Erfindung die Aufgabe zugrunde, ein verbessertes Verfahren zur wahlweisen Steuerung eines Wechselstrommotors oder eines Gleichstrommotors anzugeben, das sich insbesondere zur Verwendung in Unterseebooten eignet.

Die Aufgabe wird erfindungsgemäß hinsichtlich der Schaltungsanordnung durch die Merkmale des Anspruchs 1 und hinsichtlich des Verfahrens durch die Merkmale der Ansprüche 5 und 10 gelöst.

Vorteilhafte Ausgestaltungen der Erfindung sind Gegenstand der Unteransprüche.

Eine erfindungsgemäße Schaltungsanordnung zur wahlweisen Steuerung eines Wechselstrommotors oder eines Gleichstrommotors umfasst zwei Wandlermodule mit gleich vielen Halbbrücken, wobei die Anzahl der Halbbrücken eines Wandlermoduls mindestens so groß wie die Phasenanzahl des Wechselstrommotors ist. Ferner umfasst die Schaltungsanordnung eine mit der Anzahl der Halbbrücken in einem Wandlermodul übereinstimmende Anzahl von Brückensaugdrosseln, eine Steuereinheit für die Wandlermodule, ein erstes Vorschaltmodul für den Wechselstrommotor und ein zweites Vorschaltmodul für den Gleichstrommotor. Dabei weist jede Halbbrücke ein Paar von mittels der Steuereinheit ansteuerbaren stromrichtungsabhängigen Schalteinheiten mit je einem Eingang und je einem Ausgang auf, wobei der Ausgang einer ersten Schalteinheit jedes Paares mit dem Eingang der zweiten Schalteinheit desselben Paares verbunden ist. Ferner sind jeweils eine Halbbrücke eines ersten Wandlermoduls und eine dazu korrespondierende Halbbrücke des zweiten Wandlermoduls mittels einer zwischen die beiden Halbbrücken geschalteten Brückensaugdrossel zu einer Vollbrücke verschaltet. Jede Brückensaugdrossel weist einen Mittelabgriff auf, der wahlweise mittels des ersten Vorschaltmoduls an den Wechselstrommotor oder mittels des zweiten Vorschaltmoduls an den Gleichstrommotor anschließbar ist. Das erste Vorschaltmodul umfasst ein Wechselstromfilter, über das die Mittelabgriffe der Brückensaugdrosseln mit jeweils einer Phase des Wechselstrommotors koppelbar sind. Das zweite Vorschaltmodul umfasst wenigstens eine Zusatzsaugdrossel mit einem an den Gleichstrommotor koppelbaren Mittelabgriff und zwei jeweils an einen Mittelabgriff einer Brückensaugdrossel anschließbaren äußeren Anschlüssen.

Ein Wandlermodul wird dabei durch seine Halbbrücken gebildet und ist nicht unbedingt als eine separate Baugruppe ausgeführt.

Unter einer Saugdrossel versteht man eine Glättungsdrossel mit zwei Teilinduktivitäten, die magnetisch so gekoppelt sind, dass gleichsinnig zwischen äußeren Anschlüssen und einem Mittelanschluss fließende Ströme sich in ihrer magnetischen Wirkung aufheben und sich somit eine geringe resultierende Induktivität ergibt, aber gegensinnig fließende Ströme sich in ihrer magnetischen Wirkung verstärken und sich somit eine große resultierende Induktivität ergibt.

Die erfindungsgemäße Schaltungsanordnung kann durch Auswechseln lediglich einer Hardwarekomponente, nämlich des Vorschaltmoduls, von der Steuerung eines Gleichstrommotors auf die Steuerung eines Wechselstrommotors und umgekehrt umgestellt werden. Dies reduziert Kosten und Aufwand bei einer Umstellung eines Antriebs von Gleich- auf Wechselstrom (oder umgekehrt) und ist insbesondere für Anwendungen vorteilhaft, in denen eine derartige Umstellung erforderlich oder günstig ist, beispielsweise im Rahmen von Modernisierungen des Antriebs. Die Verwendung von Saugdrosselschaltungen ermöglicht vorteilhaft eine Begrenzung von Stromwelligkeiten des Stroms, mit dem der Gleich- oder Wechselstrommotor angetrieben wird. Zum Betrieb eines Gleichstrommotors kann die Schaltungsanordnung außerdem als Gleichstromwandler verwendet werden, der unter anderem einen Widerstandsanlasser ersetzt und dabei vorteilhaft insbesondere die von dessen Anlasswiderstand verbrauchte Energie einspart, und der es zudem ermöglicht, im Betrieb die Drehzahl und/oder Leistung auf den vom Prozess benötigten Wert zu regeln, wodurch weitere Energie eingespart wird, da sich Drehzahl und/oder Leistung nicht mehr in Abhängigkeit von der unter Umständen stark schwankenden Spannung des Gleichstromnetzes einstellen.

In einer bevorzugten Ausgestaltung der Erfindung umfassen die Schalteinheiten der Wandlermodule jeweils einen Bipolartransistor mit isolierter Gate-Elektrode, einen so genannten IGBT (= insulated-gate bipolar transistor), dessen Kollektor den Eingang der Schalteinheit definiert und dessen Emitter den Ausgang der Schalteinheit definiert.

Derartige Schalteinheiten eignen sich besonders vorteilhaft als stromrichtungsabhängige Schalteinheiten aufgrund des guten Durchlassverhaltens, der hohen Sperrspannung, Robustheit und nahezu leistungslosen Ansteuerbarkeit eines IGBT.

Eine weitere bevorzugte Ausgestaltung der Erfindung sieht wenigstens einen Stromwandler zur Erfassung eines zwischen einer Halbbrücke eines Wandlermoduls und der mit ihr verbundenen Brückensaugdrossel fließenden Stroms vor, wobei der Stromwandler zur Übermittelung des erfassten Stroms an die Steuereinheit mit der Steuereinheit verbunden ist.

Dies ermöglicht es vorteilhaft, bei der Ansteuerung wenigstens einer Halbbrücke mittels der Steuereinheit den zwischen der Halbbrücke und der entsprechenden Brückensaugdrossel fließenden Strom zu berücksichtigen.

Vorzugsweise ist die Steuereinheit zur Ansteuerung der Schalteinheiten der Halbbrücken ein Mikroprozessor.

Dies ermöglicht vorteilhaft, die Ansteuerung der Schalteinheiten in einfacher und vielfältiger Weise, z.B. durch Laden neuer Software in den Mikroprozessor, zu ändern, insbesondere beim Ersetzen des Gleichstrommotors durch den Wechselstrommotor oder umgekehrt.

Bei dem erfindungsgemäßen Verfahren zur wahlweisen Steuerung eines Wechselstrommotors oder eines Gleichstrommotors wird eine erfindungsgemäße Schaltungsanordnung verwendet. Dabei wird der Wechselstrommotor oder der Gleichstrommotor über die Schaltungsanordnung aus einer Gleichspannungsquelle gespeist, deren erster Pol mit den Eingängen der ersten Schalteinheiten aller Halbbrücken verbunden wird und deren zweiter Pol mit den Ausgängen der zweiten Schalteinheiten aller Halbbrücken verbunden wird. Ferner wird entweder jede Phase des Wechselstrommotors mittels des ersten Vorschaltmoduls an den Mittelabgriff einer Brückensaugdrosseln gekoppelt und die Wandlermodule werden mittels der Steuereinheit als ein Wechselrichter zur Umwandlung der Gleichspannung der Gleichspannungsquelle in eine Wechselspannung für den Wechselstrommotor betrieben, oder der Gleichstrommotor wird mittels des zweiten Vorschaltmoduls an Mittelabgriffe der Brückensaugdrosseln angeschlossen und die Wandlermodule werden mittels der Steuereinheit als ein Gleichspannungswandler zur Umwandlung der Gleichspannung der Gleichspannungsquelle in eine Gleichspannung für den Gleichstrommotor betrieben.

Bei dem erfindungsgemäßen Verfahren wird die erfindungsgemäße Schaltungsanordnung also an eine Gleichspannungsquelle angeschlossen und als Wechselrichter oder Gleichspannungswandler betrieben, je nachdem, ob der angeschlossene Motor der Wechselstrommotor oder Gleichstrommotor ist. Dies ermöglicht vorteilhaft die Anpassung der Betriebsart der Schaltungsanordnung an den jeweiligen Motor.

Bei dem Betreiben der Wandlermodule als ein Wechselrichter werden die Halbbrücken mittels der Steuereinheit dabei vorzugsweise gemäß einer Raumzeigermodulation derart angesteuert, dass die erzeugte Wechselspannung auf einen Sollspannungsraumzeiger einer Sollwechselspannung geregelt wird.

Die Ansteuerung der Halbbrücken gemäß einer Raumzeigermodulation ermöglicht es vorteilhaft, eine Sollwechselspannung sehr genau einzustellen und dabei eine Stromwelligkeit des erzeugten Wechselstroms zu minimieren, wie in dem unten beschriebenen Ausführungsbeispiel genauer erläutert werden wird.

Ferner werden dabei vorzugsweise Querströme, die durch die Brückensaugdrosseln zwischen den Wandlermodulen fließen, reduziert, indem bei der Raumzeigermodulation verwendete Spannungsraumzeiger der erzeugten Wechselspannungen, die durch verschiedene Schaltzustände der Halbbrücken realisierbar sind, abwechselnd durch diese verschiedenen Schaltzustände eingestellt werden.

Die Reduzierung von Querströmen, die durch die Brückensaugdrosseln zwischen den Wandlermodulen fließen, verringert vorteilhaft Verluste und Störungen bei der Erzeugung des Wechselstroms. Die Verwendung hinsichtlich der Spannungsraumzeiger redundanter Schaltzustände der Halbbrücken bei der Raumzeigermodulation ist ein einfaches und effektives Mittel zur Unterdrückung solcher Querströme und daher besonders gut zu deren Reduzierung geeignet.

Beim Anschließen des Gleichstrommotors an Mittelabgriffe der Brückensaugdrosseln wird vorzugsweise eine Zusatzsaugdrossel des zweiten Vorschaltmoduls über ihren Mittelabgriff mit einem Anker des Gleichstrommotors, über einen ersten äußeren Anschluss mit dem Mittelabgriff einer ersten Brückensaugdrossel und über den zweiten äußeren Anschluss mit dem Mittelabgriff einer zweiten Brückensaugdrossel verbunden. Ferner wird dabei der Mittelabgriff einer dritten Brückensaugdrossel mit der Erregerwicklung des Gleichstrommotors verbunden.

Auf diese Weise wird durch die Verschaltung zweier Brückensaugdrosseln mit einer Zusatzsaugdrossel die Welligkeit des durch den Gleichstrommotor fließenden Stroms vorteilhaft weiter reduziert.

Beim Betreiben der Wandlermodule als ein Gleichspannungswandler werden erste Schalteinheiten und/oder zweite Schalteinheiten zueinander korrespondierender Halbbrücken der Wandlermodule derart zeitlich zueinander versetzt geöffnet und geschlossen, dass eine Stromwelligkeit eines durch den Anker des Gleichstrommotors fließenden Stroms minimiert wird, indem für eine Solldrehzahl des Gleichstrommotors mittels der Steuereinheit ein diese Stromwelligkeit minimierender Aussteuerungsgrad der mit der ersten Brückensaugdrossel und der zweiten Brückensaugdrossel verbundenen Schalteinheiten ermittelt und eingestellt wird und die mit der dritten Brückensaugdrossel verbundenen Schalteinheiten derart angesteuert werden, dass über eine entsprechende Einstellung des Erregerstromes die Solldrehzahl erreicht wird.

Unter einem Aussteuergrad einer Schalteinheit wird dabei ein Verhältnis einer Zeitdauer, während der die Schalteinheit innerhalb einer Taktperiode geschlossen ist, zur gesamten Taktperiode verstanden.

Die Minimierung der Stromwelligkeit verringert vorteilhaft die Geräuscherzeugung des Motors.

Das erfindungsgemäße Verfahren ist insbesondere zur Verwendung zur wahlweisen Steuerung eines Wechselstrommotors oder eines Gleichstrommotors in einem Unterseeboot vorgesehen.

Das erfindungsgemäße Verfahren eignet sich besonders vorteilhaft zur Verwendung in Unterseebooten, da in Unterseebooten ein besonders geräuscharmer Betrieb von Motoren gefordert wird, welcher durch die erfindungsgemäße Verwendung von Saugdrosselschaltungen ermöglicht wird, um insbesondere taktfrequente Geräusche zu vermeiden. Des Weiteren ist es bei der Modernisierung von Unterseebooten unter Umständen sinnvoll, Gleichstrommotoren durch Drehstrommotoren, insbesondere durch Asynchronmotoren, zu ersetzen, was mit einer erfindungsgemäßen Schaltungsanordnung sehr einfach möglich ist, wie oben bereits ausgeführt wurde.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels, das im Zusammenhang mit Zeichnungen näher erläutert wird.

Dabei zeigen:
- Fig 1: eine Schaltungsanordnung zur wahlweisen Steuerung eines dreiphasigen Wechselstrommotors oder eines Gleichstrommotors im Betrieb mit dem Gleichstrommotor,
- Fig 2: eine Schaltungsanordnung zur wahlweisen Steuerung eines dreiphasigen Wechselstrommotors oder eines Gleichstrommotors im Betrieb mit dem Wechselstrommotor, und
- Fig 3: ein Raumzeigerdiagramm für die mit der in den Figuren 1 und 2 gezeigten Schaltungsanordnung an den Wechselstrommotor anlegbaren Spannungsraumzeiger und einen Sollspannungszeiger.

Einander entsprechende Teile sind in den Figuren mit den gleichen Bezugszeichen versehen.

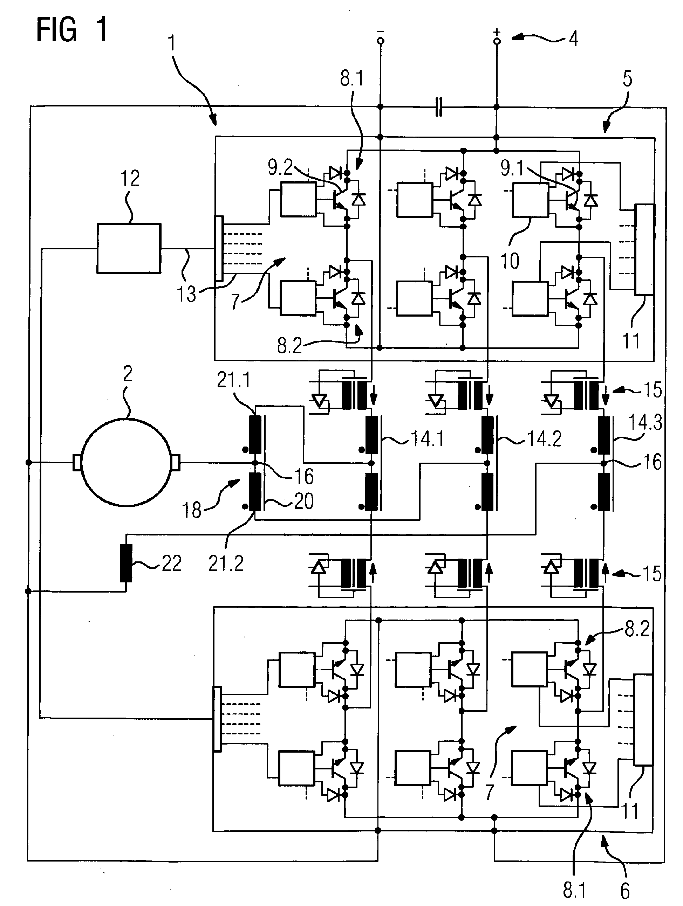

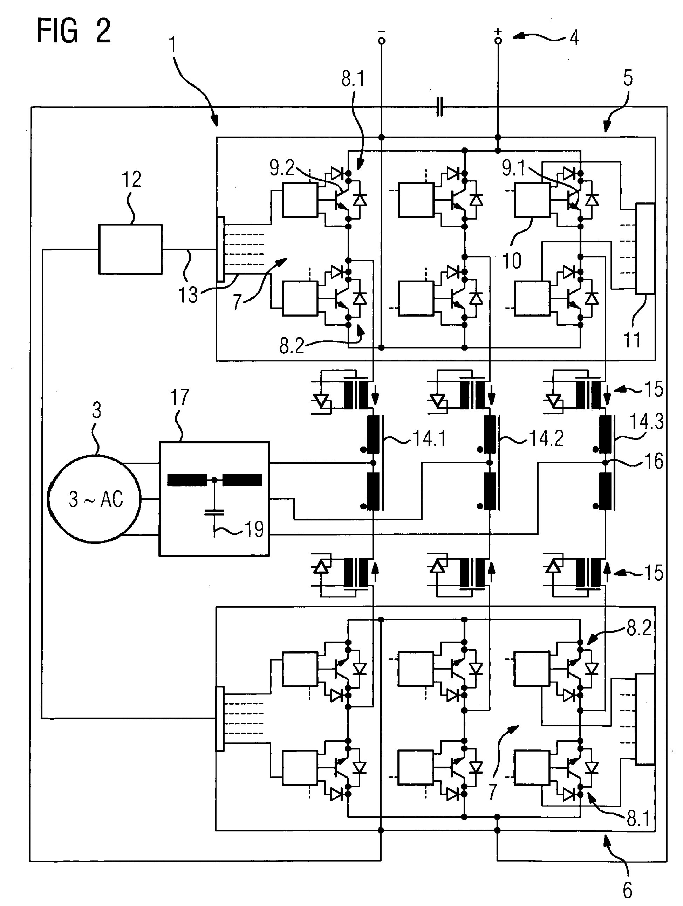

Die Figuren 1 und 2 zeigen jeweils eine erfindungsgemäße Schaltungsanordnung 1 zur wahlweisen Steuerung eines Gleichstrommotors 2 oder eines dreiphasigen Wechselstrommotors 3, wobei die Schaltungsanordnung 1 in Figur 1 im Betrieb mit dem Gleichstrommotor 2 und in Figur 2 im Betrieb mit dem Wechselstrommotor 3 gezeigt ist. Sowohl der Gleichstrommotor 2 als auch der Wechselstrommotor 3 werden über die Schaltungsanordnung 1 aus einer Gleichspannungsquelle 4 gespeist.

Die Schaltungsanordnung 1 umfasst zwei gleichartig ausgebildete Wandlermodule 5, 6, die jeweils drei Halbbrücken 7 aufweisen, wobei jede Halbbrücke 7 ein Paar von IGBT 8.1, 8.2 umfasst. Dabei ist der Emitter 9.1 eines ersten IGBT 8.1 eines jeden Paares mit dem Kollektor 9.2 des zweiten IGBT 8.2 des jeweiligen Paares verbunden. Die Kollektoren 9.2 aller ersten IGBT 8.1 sind mit dem Pluspol der Gleichspannungsquelle 4 verbunden und die Emitter 9.2 aller zweiten IGBT 8.2 sind mit dem Minuspol der Gleichspannungsquelle 4 verbunden.

Jeder IGBT 8.1, 8.2 ist an einen IGBT-Treiber 10 gekoppelt, welcher über eine Spannungsversorgung 11 des jeweiligen Wandlermoduls 5, 6 mit einer Versorgungsspannung versorgt wird, wobei in den Figuren 1 und 2 der Übersichtlichkeit halber nur für einige IGBT-Treiber 10 eine Verbindung mit der jeweiligen Spannungsversorgung 11 dargestellt ist und weitere Verbindungen lediglich angedeutet sind. Ein IGBT 8.1, 8.2 und sein IGBT-Treiber 10 bilden zusammen eine stromrichtungsabhängige Schalteinheit im Sinne der Erfindung.

Die IGBT 8.1, 8.2 sind mittels einer als Mikroprozessor ausgebildeten Steuereinheit 12 über ihren jeweiligen IGBT-Treiber 10 einzeln ansteuerbar, wobei in den Figuren 1 und 2 der Übersichtlichkeit halber nur einige Steuerleitungen 13 zwischen der Steuereinheit 12 und den IGBT-Treibern 10 dargestellt und weitere lediglich angedeutet sind.

Jeweils eine Halbbrücke 7 eines ersten Wandlermoduls 5 und eine dazu korrespondierende Halbbrücke 7 des zweiten Wandlermoduls 6 sind mittels einer zwischen diese beiden Halbbrücken 7 geschalteten Brückensaugdrossel 14.1, 14.2, 14.3 zu einer Vollbrücke verschaltet.

An jeder Verbindung einer Halbbrücke 7 mit einer Brückensaugdrossel 14.1, 14.2, 14.3 ist ein Stromwandler 15 angeordnet, mittels dessen ein zwischen der Halbbrücke 7 und der Brückensaugdrossel 14.1, 14.2, 14.3 fließender Strom erfasst wird. Die Stromwandler 15 sind jeweils zur Übermittelung des von ihnen erfassten Stroms an die Steuereinheit 12 mit der Steuereinheit 12 verbunden, wobei die Verbindungen zwischen der Steuereinheit 12 und den Stromwandlern 15 der Übersichtlichkeit halber in den Figuren 1 und 2 nicht dargestellt sind.

Jede Brückensaugdrossel 14.1, 14.2, 14.3 weist einen Mittelabgriff 16 auf, der wahlweise mittels eines ersten Vorschaltmoduls 17 an den Wechselstrommotor 3 oder mittels eines zweiten Vorschaltmoduls 18 an den Gleichstrommotor 2 anschließbar ist. Die Schaltungsanordnung 1 unterscheidet sich beim Betreiben mit einem Gleichstrommotors 2 oder einem Wechselstrommotor 3 lediglich durch das jeweilige Vorschaltmodul 17, 18. Insbesondere kann die Schaltungsanordnung 1 somit in einfacher Weise durch ein Auswechseln des Vorschaltmoduls 17, 18 vom Betrieb mit dem Gleichstrommotor 2 auf den Betrieb mit dem Wechselstrommotor 3 umgerüstet werden und umgelehrt.

Das erste Vorschaltmodul 17 umfasst ein Wechselstromfilter 19, über das die Mittelabgriffe 16 der Brückensaugdrosseln 14.1, 14.2, 14.3 mit jeweils einer Phase des Wechselstrommotors 3 koppelbar sind und im Falle des Betreibens der Schaltungsanordnung 1 mit dem Wechselstrommotor 3 gekoppelt werden.

Das zweite Vorschaltmodul 18 weist eine Zusatzsaugdrossel 20 auf, die über einen Mittelabgriff 16 mit dem Gleichstrommotor 2 koppelbar ist und zwei äußere Anschlüsse 21.1, 21.2 aufweist, über die jeweils ein Ende der Zusatzsaugdrossel 20 mit einem Mittelabgriff 16 einer Brückensaugdrossel 14.1, 14.2, 14.3 verbindbar ist.

Beim Betreiben der Schaltungsanordnung 1 mit dem Gleichstrommotor 2 werden dementsprechend ein erster äußerer Anschluss 21.1 der Zusatzsaugdrossel 20 mit dem Mittelabgriff 16 einer ersten Brückensaugdrossel 14.1, der zweite äußere Anschluss 21.2 der Zusatzsaugdrossel 20 mit dem Mittelabgriff 16 einer zweiten Brückensaugdrossel 14.2 und der Mittelabgriff 16 der Zusatzsaugdrossel 20 mit einem Anker des Gleichstrommotors 2 verbunden. Der Mittelabgriff 16 der dritten Brückensaugdrossel 14.3 wird mit der Erregerwicklung 22 des Gleichstrommotors 2 verbunden.

Beim Betreiben der Schaltungsanordnung 1 mit dem Gleichstrommotor 2 werden die Wandlermodule 5, 6 mittels der Steuereinheit 12 als ein Gleichspannungswandler zur Umwandlung der Gleichspannung der Gleichspannungsquelle 4 in eine Gleichspannung für den Gleichstrommotor 2 entsprechend dem aus EP 0 178 446 A1 bekannten Verfahren betrieben.

Dabei werden die ersten IGBT 8.1 und/oder die zweiten IGBT 8.2 derart zeitlich zueinander versetzt geöffnet und geschlossen, dass eine Stromwelligkeit eines durch den Anker des Gleichstrommotors 2 fließenden Stroms minimiert wird. Dazu wird für eine Solldrehzahl des Gleichstrommotors 2 mittels der Steuereinheit 12 ein diese Stromwelligkeit minimierender Aussteuerungsgrad der mit der ersten Brückensaugdrossel 14.1 und der zweiten Brückensaugdrossel 14.2 verbundenen jeweiligen ersten und/oder zweiten IGBT 8.1, 8.2 ermittelt und eingestellt, und die mit der dritten Brückensaugdrossel 14.3 verbundenen IGBT 8.1, 8.2 derart angesteuert und somit der Erregerstrom so eingestellt, dass die Solldrehzahl erreicht wird.

Beim Betreiben der Schaltungsanordnung 1 mit dem Wechselstrommotor 3 werden die Wandlermodule 5, 6 mittels der Steuereinheit 12 als ein Wechselrichter zur Umwandlung der Gleichspannung der Gleichspannungsquelle 4 in eine Wechselspannung für den Wechselstrommotor 3 betrieben.

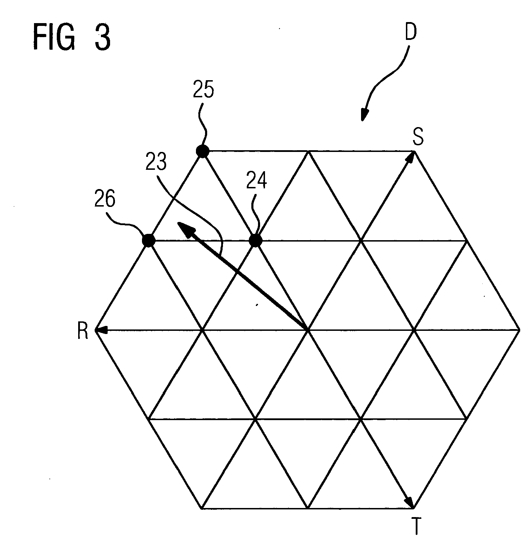

Dabei werden die IGBT 8.1, 8.2 mittels der Steuereinheit 12 durch eine Raumzeigermodulation für an den Wechselstrommotor 3 angelegte Spannungen derart zueinander zeitlich versetzt geöffnet und geschlossen, dass die an den Wechselstrommotor 3 angelegte Spannung auf eine Sollwechselspannung geregelt wird, wobei eine Stromwelligkeit des erzeugten Wechselstroms sowie Querströme, die durch die Brückensaugdrosseln 14.1, 14.2, 14.3 zwischen den Wandlermodulen 5, 6 fließen, minimiert werden. Dies wird im Folgenden anhand von Figur 3 näher erläutert.

Die IGBT 8.1, 8.2 einer Halbbrücke 7 werden jeweils abwechselnd geöffnet und geschlossen, so dass immer genau einer dieser IGBT 8.1, 8.2 geöffnet und der andere IGBT 8.1, 8.2 geschlossen ist. Jede Halbbrücke 7 hat somit zwei Schaltzustände (erster IGBT 8.1 geöffnet und zweiter IGBT 8.2 geschlossen oder umgekehrt). Da die Schaltungsanordnung 1 im in den Figuren 1 und 2 dargestellten Ausführungsbeispiel insgesamt sechs Halbbrücken 7 aufweist, ergeben sich insgesamt 2⁶° = °64 verschiedene mögliche Schaltzustände aller Halbbrücken 7. Hinsichtlich der verketteten Phasenspannungen der dadurch jeweils erzeugten Wechselspannungen sind jedoch viele dieser Schaltzustände redundant, d.h. es gibt verschiedene Schaltzustände der Halbbrücken 7, die dieselben verketteten Phasenspannungen liefern. Insgesamt ergeben sich neunzehn verschiedene Spannungsraumzeiger, die jeweils verschieden verketteten Phasenspannungen entsprechen.

Figur 3 zeigt das sich ergebende Raumzeigerdiagramm D dieser neunzehn verschiedenen mittels der Halbbrücken 7 erzeugbaren Spannungsraumzeiger, wobei die drei Wechselstromphasen mit R, S, T bezeichnet sind und jeder Knoten des in Figur 3 dargestellten Raumzeigerdiagramms D den Endpunkt eines von dem Mittelpunkt des Raumzeigerdiagramms D zu dem Knoten reichenden möglichen Spannungsraumzeigers angibt.

Ein Sollspannungsraumzeiger 23 einer einzustellenden Sollwechselspannung liegt im Allgemeinen innerhalb eines Dreiecks von drei ihn umgebenden Knoten 24, 25, 26, die möglichen Spannungsraumzeigern entsprechen, welche dem Sollspannungsraumzeiger 23 am nächsten liegen. Mittels der Steuereinheit 12 werden durch die Raumzeigermodulation abwechselnd Schaltzustände der Halbbrücken 7 eingestellt, die jeweils einen zu einem der drei Knoten 24, 25, 26 korrespondierenden Spannungsraumzeiger realisieren, so dass der zeitliche Mittelwert dieser realisierten Spannungsraumzeiger den Sollspannungsraumzeiger 23 ergibt. Dadurch werden vorteilhaft die taktfrequente Stromwelligkeit des erzeugten Wechselstroms und damit auch die Größe des erforderlichen Wechselstromfilters 19 minimiert.

Wie oben bereits ausgeführt wurde, sind verschiedene Schaltzustände der Halbbrücken 7 hinsichtlich der von ihnen erzeugten Spannungsraumzeiger redundant. Dies wird ausgenutzt, um Querströme zu minimieren, die durch die Brückensaugdrosseln 14.1, 14.2, 14.3 zwischen den Wandlermoduln 5, 6 fließen. Dazu werden bei der Raumzeigermodulation Spannungsraumzeiger, die zu redundanten Schaltzuständen gehören, abwechselnd durch verschiedene dieser Schaltzustände realisiert.

Obwohl die Erfindung im Detail durch ein bevorzugtes Ausführungsbeispiel näher illustriert und beschrieben wurde, so ist sie nicht durch dieses offenbarte Beispiel eingeschränkt und andere Variationen können vom Fachmann hieraus abgeleitet werden, ohne den Schutzumfang der Erfindung zu verlassen.

## Patentansprüche

1. Schaltungsanordnung (1) zur Steuerung eines Wechselstrommotors (3), umfassend
- zwei Wandlermodule (5, 6) mit gleich vielen Halbbrücken (7), wobei die Anzahl der Halbbrücken (7) eines Wandlermoduls (5, 6) mindestens so groß wie die Phasenanzahl des Wechselstrommotors (3) ist,
- eine mit der Anzahl der Halbbrücken (7) in einem Wandlermodul (5, 6) übereinstimmende Anzahl von Brückensaugdrosseln (14.1, 14.2, 14.3),
- eine Steuereinheit (12) für die Wandlermodule (5, 6),
- ein erstes Vorschaltmodul (17) für den Wechselstrommotor (3),
wobei
- jede Halbbrücke (7) ein Paar von mittels der Steuereinheit, (12) ansteuerbaren stromrichtungsabhängigen Schalteinheiten mit je einem Eingang und je einem Ausgang aufweist, wobei der Ausgang einer ersten Schalteinheit jedes Paares mit dem Eingang der zweiten Schalteinheit desselben Paares verbunden ist,
- jeweils eine Halbbrücke (7) eines ersten Wandlermoduls (5) und eine dazu korrespondierende Halbbrücke (7) des zweiten Wandlermoduls (6) mittels einer zwischen die beiden Halbbrücken (7) geschalteten Brückensaugdrossel (14.1, 14.2, 14.3) zu einer Vollbrücke verschaltet sind,
- jede Brückensaugdrossel (14.1, 14.2, 14.3) einen Mittelabgriff (16) aufweist, der mittels des ersten Vorschaltmoduls (17) an den Wechselstrommotor (3) anschließbar ist,
- das erste Vorschaltmodul (17) ein Wechselstromfilter (19) umfasst, über das die Mittelabgriffe (16) der Brückensaugdrosseln (14.1, 14.2, 14.3) mit jeweils einer Phase des Wechselstrommotors (3) koppelbar sind,
**dadurch gekennzeichnet, dass** die Schaltungsanordnung (1) zur wahlweisen Steuerung eines Wechselstrommotors (3) oder eines Gleichstrommotors (2) ausgebildet ist,
wobei die Schaltungsanordnung (1) ein zweites Vorschaltmodul (18) für den Gleichstrommotor (2) umfasst,
wobei der Mittelabgriff (16) jeder Brückensaugdrossel (14.1, 14.2, 14.3) wahlweise mittels des ersten Vorschaltmoduls (17) an den Wechselstrommotor (3) oder mittels des zweiten Vorschaltmoduls (18) an den Gleichstrommotor (2) anschließbar ist,
wobei das zweite Vorschaltmodul (18) wenigstens eine Zusatzsaugdrossel (20) mit einem an den Gleichstrommotor (2) koppelbaren Mittelabgriff (16) und zwei jeweils an einen Mittelabgriff (16) einer Brückensaugdrossel (14.1, 14.2, 14.3) anschließbaren äußeren Anschlüssen (21.1, 21.2) umfasst.

2. Schaltungsanordnung (1) nach Anspruch 1,
**dadurch gekennzeichnet, dass** die Schalteinheiten der Wandlermodule (5, 6) jeweils einen Bipolartransistor (8.1, 8.2) mit isolierter Gate-Elektrode umfassen, dessen Kollektor (9.2) den Eingang der Schalteinheit definiert und dessen Emitter (9.1) den Ausgang der Schalteinheit definiert.

3. Schaltungsanordnung (1) nach einem der vorhergehenden Ansprüche,
**gekennzeichnet durch** wenigstens einen Stromwandler (15) zur Erfassung eines zwischen einer Halbbrücke (7) eines Wandlermoduls (5, 6) und der mit ihr verbundenen Brückensaugdrossel (14.1, 14.2, 14.3) fließenden Stroms, wobei der Stromwandler (15) zur Übermittelung des erfassten Stroms an die Steuereinheit (12) mit der Steuereinheit (12) verbunden ist.

4. Schaltungsanordnung (1) nach einem der vorhergehenden Ansprüche,
**gekennzeichnet durch** einen Mikroprozessor als Steuereinheit (12) zur Ansteuerung der Schalteinheiten der Halbbrücken (7).

5. Verfahren zur wahlweisen Steuerung eines Wechselstrommotors (3) oder eines Gleichstrommotors (2) mittels einer Schaltungsanordnung (1) nach einem der vorhergehenden Ansprüche ,
wobei
- der Wechselstrommotor (3) oder der Gleichstrommotor (2) über die Schaltungsanordnung (1) aus einer Gleichspannungsquelle (4) gespeist wird, deren erster Pol mit den Eingängen der ersten Schalteinheiten aller Halbbrücken (7) verbunden wird und deren zweiter Pol mit den Ausgängen der zweiten Schalteinheiten aller Halbbrücken (7) verbunden wird,
und wobei
- entweder jede Phase des Wechselstrommotors (3) mittels des ersten Vorschaltmoduls (17) an den Mittelabgriff (16) einer Brückensaugdrosseln (14.1, 14.2, 14.3) gekoppelt wird und die Wandlermodule (5, 6) mittels der Steuereinheit (12) als ein Wechselrichter zur Umwandlung der Gleichspannung der Gleichspannungsquelle (4) in eine Wechselspannung für den Wechselstrommotor (3) betrieben werden,
- oder der Gleichstrommotor (2) mittels des zweiten Vorschaltmoduls (18) an Mittelabgriffe (16) der Brückensaugdrosseln (14.1, 14.2, 14.3) angeschlossen wird und die Wandlermodule (5, 6) mittels der Steuereinheit (12) als ein Gleichspannungswandler zur Umwandlung der Gleichspannung der Gleichspannungsquelle (4) in eine Gleichspannung für den Gleichstrommotor (2) betrieben werden.

6. Verfahren nach Anspruch 5,
**dadurch gekennzeichnet, dass** beim Betreiben der Wandlermodule (5, 6) als ein Wechselrichter die Halbbrücken (7) mittels der Steuereinheit (12) gemäß einer Raumzeigermodulation derart angesteuert werden, dass die erzeugte Wechselspannung auf einen Sollspannungsraumzeiger (23) einer Sollwechselspannung geregelt wird.

7. Verfahren nach Anspruch 6,
**dadurch gekennzeichnet, dass** Querströme, die durch die Brückensaugdrosseln (14.1, 14.2, 14.3) zwischen den Wandlermodulen (5, 6) fließen, reduziert werden, indem bei der Raumzeigermodulation verwendete Spannungsraumzeiger der erzeugten Wechselspannungen, die durch verschiedene Schaltzustände der Halbbrücken (7) realisierbar sind, abwechselnd durch diese verschiedenen Schaltzustände eingestellt werden.

8. Verfahren nach einem der Ansprüche 5 bis 7,
**dadurch gekennzeichnet, dass** beim Anschließen des Gleichstrommotors (2) an Mittelabgriffe (16) der Brückensaugdrosseln (14.1, 14.2, 14.3) eine Zusatzsaugdrossel (20) des zweiten Vorschaltmoduls (18) über ihren Mittelabgriff (16) mit einem Anker des Gleichstrommotors (2), über einen ersten äußeren Anschluss (21.1) mit dem Mittelabgriff (16) einer ersten Brückensaugdrossel (14.1) und über den zweiten äußeren Anschluss (21.2) mit dem Mittelabgriff (16) einer zweiten Brückensaugdrossel (14.2) verbunden wird und der Mittelabgriff (16) einer dritten Brückensaugdrossel (14.3) mit der Erregerwicklung (22) des Gleichstrommotors (2) verbunden wird.

9. Verfahren nach Anspruch 8,
**dadurch gekennzeichnet, dass** beim Betreiben der Wandlermodule (5, 6) als ein Gleichspannungswandler erste Schalteinheiten und/oder zweite Schalteinheiten zueinander korrespondierender Halbbrücken (7) der Wandlermodule (5, 6) derart zeitlich zueinander versetzt geöffnet und geschlossen werden, dass eine Stromwelligkeit eines durch den Anker des Gleichstrommotors (2) fließenden Stroms minimiert wird, indem für eine Solldrehzahl des Gleichstrommotors (2) mittels der Steuereinheit (12) ein diese Stromwelligkeit minimierender Aussteuerungsgrad der mit der ersten Brückensaugdrossel (14.1) und der zweiten Brückensaugdrossel (14.2) verbundenen Schalteinheiten ermittelt und eingestellt wird und die mit der dritten Brückensaugdrossel (14.3) verbundenen Schalteinheiten derart angesteuert werden, dass über die Einstellung eines entsprechenden Erregerstromes die Solldrehzahl erreicht wird.

10. Verwendung des Verfahrens nach einem der Ansprüche 5 bis 9 zur wahlweisen Steuerung eines Wechselstrommotors (3) oder eines Gleichstrommotors (2) in einem Unterseeboot.

## Claims

1. Circuit arrangement (1) for control of an alternating current motor (3), comprising
- two converter modules (5, 6) with the same number of half-bridges (7), wherein the number of half-bridges (7) of a converter module (5, 6) is at least as great as the number of phases of the alternating current motor (3),
- a number of bridge interphase transformers (14.1, 14.2, 14.3) matching the number of half-bridges (7) in a converter module (5, 6),
- a control unit (12) for the converter modules (5, 6),
- a first series module (17) for the alternating current motor (3),
wherein
- each half-bridge (7) has a pair of current direction-dependent switch units, controllable by means of the control unit (12), each comprising an input and an output, the output of a first switch unit of each pair being linked to the input of the second switch unit of the same pair,
- in each case, a half-bridge (7) of a first converter module (5) and a corresponding half-bridge (7) of the second converter module (6) are connected by means of a bridge interphase transformer (14.1, 14.2, 14.3) connected between the two half-bridges (7) to a full bridge,
- each bridge interphase transformer (14.1, 14.2, 14.3) has a centre tap (16) which can be connected via the first series module (17) to the alternating current motor (3),
- the first series module (17) comprises an alternating current filter (19), by means of which the centre taps (16) of the bridge interphase transformers (14.1, 14.2, 14.3) can each be coupled to a phase of the alternating current motor (3),
**characterised in that** the circuit arrangement (1) is configured for elective control of an alternating current motor (3) or a direct current motor (2),
wherein the circuit arrangement (1) comprises a second series module (18) for the direct current motor (2),
wherein the centre tap (16) of each bridge interphase transformer (14.1, 14.2, 14.3) can optionally be connected via the first series module (17) to the alternating current motor (3), or via the second series module (18) to the direct current motor (2),
wherein the second series module (18) comprises at least one additional interphase transformer (20) with a centre tap (16) which can be coupled to the direct current motor (2) and two outer terminals (21.1, 21.2), each connectable to a centre tap (16) of a bridge interphase transformer (14.1, 14.2, 14.3).

2. Circuit arrangement (1) according to claim 1,
**characterised in that** the switch units of the converter modules (5, 6) each comprise a bipolar transistor (8.1, 8.2) with an insulated-gate electrode, the collector (9.2) of which defines the input of the switch unit and the emitter (9.1) of which defines the output of the switch unit.

3. Circuit arrangement (1) according to one of the preceding claims,
**characterised by** at least one current transformer (15) for detecting a current flowing between a half-bridge (7) of a converter module (5, 6) and the bridge interphase transformer (14.1, 14.2, 14.3) connected thereto, wherein the current transformer (15) is connected to the control unit (12) to communicate the detected current to the control unit (12).

4. Circuit arrangement (1) according to one of the preceding claims,
**characterised by** a microprocessor as the control unit (12) for controlling the switch units of the half-bridges (7).

5. Method for elective control of an alternating current motor (3) or a direct current motor (2) by means of a circuit arrangement (1) according to one of the preceding claims, wherein
- the alternating current motor (3) or the direct current motor (2) is fed via the circuit arrangement (1) from a DC voltage source (4), the first pole of which is connected to the inputs of the first switch units of all the half-bridges (7) and the second pole of which is connected to the outputs of the second switch units of all the half-bridges (7),
and wherein
- either each phase of the alternating current motor (3) is coupled via the first series module (17) to the centre tap (16) of a bridge interphase transformer (14.1, 14.2, 14.3) and the converter modules (5, 6) are operated by means of the control unit (12) as an inverter for converting the DC voltage of the DC voltage source (4) into an AC voltage for the alternating current motor (3),
- or the direct current motor (2) is coupled via the second series module (18) to the centre taps (16) of the bridge interphase transformers (14.1, 14.2, 14.3) and the converter modules (5, 6) are operated by means of the control unit (12) as a DC-DC converter for converting the DC voltage of the DC voltage source (4) into a DC voltage for the direct current motor (2).

6. Method according to claim 5,
**characterised in that** during operation of the converter modules (5, 6) as an inverter, the half-bridges (7) are controlled by means of the control unit (12) according to a space vector modulation such that the AC voltage generated is regulated onto a target voltage space vector (23) of a target AC voltage.

7. Method according to claim 6,
**characterised in that** cross currents which flow through the bridge interphase transformers (14.1, 14.2, 14.3) between the converter modules (5, 6) are reduced **in that** the voltage space vectors which are used during the space vector modulation for the generated AC voltages which can be realised by means of different switching states of the half-bridges (7) are alternately set through these different switching states.

8. Method according to one of the claims 5 to 7,
**characterised in that** on connection of the direct current motor (2) to centre taps (16) of the bridge interphase transformers (14.1, 14.2, 14.3), an additional interphase transformer (20) of the second series module (18) is connected via the centre tap (16) thereof to an armature of the direct current motor (2), via a first outer terminal (21.1) to the centre tap (16) of a first bridge interphase transformer (14.1) and via the second outer terminal (21.2) to the centre tap (16) of a second bridge interphase transformer (14.2) and the centre tap (16) of a third interphase transformer (14.3) is connected to the field winding (22) of the direct current motor (2).

9. Method according to claim 8,
**characterised in that**, on operation of the converter modules (5, 6) as a DC-DC converter, first switch units and/or second switch units of mutually corresponding half-bridges (7) of the converter modules (5, 6) are opened and closed temporally offset to one another such that a ripple in a current flowing through the armature of the direct current motor (2) is minimised **in that** for a target speed of the direct current motor (2), by means of the control unit (12), a control factor of the switch units connected to the first bridge interphase transformer (14.1) and the second bridge interphase transformer (14.2) minimising this current ripple is determined and set and the switch units connected to the third bridge interphase transformer (14.3) are controlled such that the target speed is reached by means of the setting of a suitable field current.

10. Use of the method according to one of the claims 5 to 9 for elective control of an alternating current motor (3) or a direct current motor (2) in a submarine.

## Revendications

1. Montage (1) de commande d'un moteur (3) à courant alternatif, comprenant :
- deux modules (5, 6) de convertisseur ayant le même nombre de demi-ponts (7), le nombre des demi-ponts d'un module (5, 6) de convertisseur étant au moins aussi grand que le nombre de phases du moteur (3) à courant alternatif,
- un nombre de bobines (14.1, 14.2, 14.3) de compensation de pont coïncidant avec le nombre des demi-ponts dans un module (5, 6) de convertisseur,
- une unité (12) de commande des modules (5, 6) de convertisseur,
- un premier module (17) de ballast pour le moteur (3) à courant alternatif,
dans lequel
- chaque demi-pont (7) a une paire d'unités de commutation en fonction du sens du courant, pouvant être commandées au moyen de l'unité (12) de commande, ayant respectivement une entrée et une sortie, la sortie d'une première unité de commutation de chaque paire étant reliée à l'entrée de la deuxième unité de commutation de la même paire,
- respectivement, un demi-pont (7) d'un premier module (5) de convertisseur et un demi-pont (7) y correspondant du deuxième module (6) de convertisseur étant câblés en un pont complet au moyen d'une bobine (14.1, 14.2, 14.3) de compensation de pont montée entre les demi-ponts (7),
- chaque bobine (14.1, 14.2, 14.3) de compensation de pont a une prise (16) médiane, qui peut être reliée au moteur (3) à courant alternatif au moyen du premier module (17) de ballast,
- le premier module (17) de ballast comprend un filtre (19) de courant alternatif, par lequel les prises (16) médianes des bobines (14.1, 14.2, 14.3) de compensation de pont peuvent être couplées à respectivement une phase du moteur (3) à courant alternatif,
**caractérisé en ce que** le montage (1) est constitué pour commander au choix un moteur (3) à courant alternatif ou un moteur (2) à courant continu, le montage (1) comprenant un deuxième module (18) de ballast pour le moteur (2) à courant continu,
la prise (16) médiane de chaque bobine (14.1, 14.2, 14.3) de compensation de pont, pouvant être reliée au choix, au moyen du premier module (17) de ballast, au moteur (3) à courant alternatif ou, au moyen du deuxième module (18) de ballast, au moteur (2) à courant continu,
le deuxième module (18) de ballast comprenant au moins une bobine (20) de compensation supplémentaire ayant une prise (16) médiane pouvant être couplée au moteur (2) à courant continu et deux bornes (21.1, 21.2) extérieures pouvant être reliées respectivement à une prise (16) médiane d'une bobine (14.1, 14.2, 14.3) de compensation de pont.

2. Montage (1) suivant la revendication 1,
**caractérisé en ce que** les unités de commutation des modules (5, 6) convertisseurs comprennent respectivement un transistor (8.1, 8.2) bipolaire ayant une électrode de grille isolée, dont le collecteur (9.2) définit l'entrée de l'unité de commutation et dont l'émetteur (9.1) définit la sortie de l'unité de commutation de pont.

3. Montage (1) suivant l'une des revendications précédentes, **caractérisé par** au moins un convertisseur (15) de courant pour détecter un courant passant entre un demi-pont (7) d'un module (5, 6) de convertisseur et la bobine (14.1, 14.2, 14.3) de compensation de pont qui lui est reliée, le convertisseur (15) de courant étant, pour la transmission du courant détecté à l'unité (12) de commande, relié à l'unité (12) de commande.

4. Montage (1) suivant l'une des revendications précédentes, **caractérisé par** un microprocesseur comme une unité (12) de commande pour commander les unités de commutation des demi-ponts (7).

5. Procédé pour commander au choix un moteur (3) à courant alternatif ou un moteur (2) à courant continu au moyen d'un montage (1) suivant l'une des revendications précédentes, dans lequel
- on alimente le moteur (3) à courant alternatif ou le moteur (2) à courant continu par le montage (1) à partir d'une source (4) de tension continue, dont le premier pôle est relié aux entrées des premières unités de commutation de tous les demi-ponts (7) et dont le deuxième pôle est relié aux sorties des deuxièmes unités de commutation de tous les demi-ponts (7),
et dans lequel
- ou bien on couple chaque phase du moteur (3) à courant alternatif, au moyen du premier module (17) de ballast, à la prise (16) médiane d'une bobine (14.1, 14.2, 14.3) de compensation de pont et on fait fonctionner les modules (5, 6) de convertisseurs au moyen de l'unité (12) de commande en onduleur, pour la transformation de la tension continue de la source (4) de tension continue en une tension alternative pour le moteur (3) à courant alternatif,
- ou bien on relie le moteur (2) à courant continu, au moyen du deuxième module (18) de ballast, à des prises (16) médianes des bobines (14.1, 14.2, 14.3) de compensation de pont et on fait fonctionner les modules (5, 6) de convertisseur au moyen d'unités (12) de commande en convertisseur de tension continue pour transformer la tension continue de la source (4) de tension continue en une tension continue pour le moteur (2) à courant continu.

6. Procédé suivant la revendication 5,
**caractérisé en ce que**, lorsque les modules (5, 6) de convertisseur fonctionnent en onduleur, on commande les demi-ponts au moyen de l'unité (12) de commande suivant une modulation par vecteur d'espace de manière à réguler la tension alternative produite sur un vecteur (23) d'espace d'une tension alternative de consigne.

7. Procédé suivant la revendication 6,
**caractérisé en ce que** l'on réduit des courants transversaux qui passent entre les modules (5, 6) de convertisseurs par les bobines (14.1, 14.2, 14.3) de compensation de pont, en réglant pour le vecteur d'espace de tension, utilisé dans la modulation par vecteurs d'espace, des tensions alternatives produites, qui peuvent être réalisées par des états de commutation différents des demi-ponts (7), en alternance par ces états de commutation différents.

8. Procédé suivant l'une des revendications 5 à 7, **caractérisé en ce que**, lorsque le moteur (2) à courant continu est relié aux prises (16) médianes des bobines (14.1, 14.2, 14.3) de compensation de pont, on relie une bobine (20) de compensation supplémentaire du deuxième module (18) de ballast, par sa prise (16) médiane, à un induit du moteur (2) à courant continu, par une première borne (21.1) extérieure à la prise (16) médiane d'une première bobine (14.1) de compensation de pont, et par la deuxième borne (21.2) extérieure à la prise (16) médiane d'une deuxième bobine (14.2) de compensation de pont et on relie la prise (16) médiane d'une troisième bobine (14.3) de compensation de pont à l'enroulement (22) d'excitation du moteur (2) à courant continu.

9. Procédé suivant la revendication 8,
**caractérisé en ce que**, lorsque les modules (5, 6) fonctionnent comme convertisseurs de tension continue, on ouvre et on ferme, de manière décalée les unes par rapport aux autres dans le temps, des premières unités de commutation et/ou des deuxièmes unités de commutation de demi-ponts (7) se correspondant les uns aux autres, de manière à minimiser une ondulation d'un courant passant par l'induit du moteur (2) à courant continu, en déterminant et en réglant, pour une vitesse de rotation de consigne du moteur (2) à courant continu au moyen de l'unité (12) de commande, un degré de commande, minimisant cette ondulation de courant, des unités de commutation reliées à la première bobine (14.1) de compensation de pont et à la deuxième bobine (14.2) de compensation de pont et on commande les unités de commutation reliées à la troisième borne (14.3) de compensation, de manière à obtenir la vitesse de rotation de consigne par le réglage d'un courant d'excitation adéquat.

10. Utilisation du procédé suivant l'une des revendications 5 à 9 pour commander au choix un moteur (3) à courant alternatif ou un moteur (2) à courant continu dans un sous-marin.
